# EUROPÄISCHE PATENTSCHRIFT

(11) **EP 2 149 442 B1**
(45) Veröffentlichungstag und Bekanntmachung des Hinweises auf die Patenterteilung: **27.10.2010**
(21) Anmeldenummer: 09009484.8
(22) Anmeldetag: 22.07.2009
(51) Int. Cl.: B29C 45/14, B32B 27/12, B32B 38/00

(54) **Verwendung eines Kaschierverbundes zur Herstellung eines Kunststoffformteils sowie Verfahren zur Herstellung eines für die Verwendung geeigneten Kaschierverbundes**
Use of a laminating compound for generating a plastic moulded part and method for producing a laminating compound suitable for the use
Utilisation d'un composite de masquage pour la fabrication d'une pièce de formage en matière plastique et procédé de fabrication d'un composite de masquage approprié à l'utilisation

(30) Priorität: 31.07.2008 DE 102008035956
(43) Veröffentlichungstag der Anmeldung: 03.02.2010
(73) Patentinhaber: Nordenia Deutschland Gronau GmbH, 48599 Gronau (DE)
(72) Erfinder: Bader, Herbert, Dr., 48356 Nordwalde (DE); Gründken, Marcel, 48599 Gronau (DE)
(74) Vertreter: Albrecht, Rainer Harald

(56) Entgegenhaltungen:
- EP-A- 0 688 263
- DE-A1- 3 335 669
- DE-A1-102004 009 244
- DE-A1-102006 024 263

## Beschreibung

Die Erfindung betrifft die Verwendung eines Kaschierverbundes zur Herstellung eines hinterspritzten Kunststoffformteils. Gegenstand der Erfindung ist auch ein Verfahren zur Herstellung eines für die Verwendung geeigneten Kaschierverbundes. Der Kaschierverbund umfasst an einer Oberseite eine Kunststofffolie, die nach dem Hinterspritzen des Kaschierverbundes mit einer Polymerschmelze eine Dekoroberfläche bildet.

Auf diese Weise gebildete Kunststoffformteile werden bei der Innenausstattung von Kraftfahrzeugen als Verkleidungsteile beispielsweise im Bereich der Türen, der Säulen oder des Armaturenträgers eingesetzt, wobei die außen liegende Kunststofffolie des hinterspritzten Kaschierverbundes sichtbar und für den Benutzer zugänglich ist. Bezüglich des Aussehens der Oberfläche, der Beständigkeit gegenüber mechanischen und chemischen Einwirkungen, der Gleichmäßigkeit und der Beständigkeit werden deshalb sehr hohe Anforderungen gestellt.

Wie der WO 2007/028651 A1 zu entnehmen ist, ist aus der Praxis bekannt, eine Kunststoffffolie zur Herstellung eines Kunststoffformteiles vorzusehen, wobei die Kunststofffolie in ein Spritzgießwerkzeug eingebracht und nachfolgend mit einer Polymerschmelze hinterspritzt wird. Die Kunststofffolie wird dabei gedehnt und an eine zugeordnete Fläche des Spritzgießwerkzeuges gedrückt. Aus optischen Gründen ist bei den die Oberfläche der Kunststoffformteile bildenden Kunststofffolie üblicherweise eine Prägung, beispielsweise in Form einer Lederstruktur, vorgesehen. Die Prägung kann sowohl bei der Herstellung der Kunststofffolie oder nachfolgend durch eine entsprechende Oberflächenstrukturierung des Spritzgießwerkzeuges erfolgen.

Um die erforderliche Beständigkeit eines aus einer hinterspritzten Folie gebildeten Kunststoffformteiles zu gewährleisten, muss eine ausreichende, dauerhafte Verbindung zwischen der Kunststofffolie und dem hinterspritzten Kunststoff gewährleistet sein. Auch wenn in dem Kontaktbereich zwischen der Kunststofffolie und dem hinterspritzten Kunststoff eine Schicht eines besonderen, haftvermittelnden Polymers vorgesehen ist, ist bei den aus dem Stand der Technik bekannten Kunststoffformteilen häufig die Haftung zwischen Kunststofffolie und hinterspritztem Polymersubstrat noch verbesserungsbedürftig. Dabei ist zu berücksichtigen, dass die Kunststofffolie nur kurzzeitig mit der heißen Polymerschmelze in Kontakt kommt, bevor die Folie an das Spritzgießwerkzeug angedrückt und dabei abgekühlt wird.

Aus der DE 10 2006 024 263 A1 ist ein Kunststoffformteil bekannt, weiches aus einem mit einer Polymermasse hinterspritzten Kaschierverbund gebildet ist. Der Kaschierverbund umfasst eine thermoplastische Folie, die bei dem Kunststoffformteil die sichtbare Oberfläche bildet. Um eine möglichst dünne thermoplastische Folie einsetzen zu können, ist vorgesehen, diese mit einer Materialbahn zu kaschieren, welche eine offene Struktur aufweist. Als Materialbahn kann ein Nonwoven-Material, Stoff, Fasern, Filz, Textil oder eine Art Wolle vorgesehen sein. Die zusätzliche Materialbahn dient einer Verstärkung der thermoplastischen Folie, so dass diese mit einer vergleichsweise geringen Dicke ausgeführt sein kann. Da die zusätzliche, mit der thermoplastischen Folie kaschierte Materialbahn gemäß der aus der DE 10 2006 024 263 A1 bekannten Ausführung als Verstärkung vorgesehen ist, weist dieser Kaschierverbund insgesamt eine schlechte Dehnbarkeit auf, die im Wesentlichen durch die zusätzliche Materialbahn bestimmt wird. Aufgrund des hohen Widerstandes bei der Dehnung des Kaschierverbundes während dem Hinterspritzen in einem Spritzgießwerkzeug besteht insbesondere bei komplexen Geometrien, die starke Dehnungen und Krümmungen erfordern, die Gefahr einer Rissbildung, wodurch die als Dekoroberfläche vorgesehene thermoplastische Folie lokal beschädigt werden kann. Darüber hinaus besteht auch die Gefahr, dass während des Spritzgießverfahrens bei einem Aufreißen des Kaschierverbundes die Polymerschmelze durch die gebildeten Risse hindurch tritt, wodurch das Kunststoffformteil unbrauchbar wird.

Kaschierverbunde für Hygieneartikel mit einem Nonwoven-Material und einer damit kaschierten Kunststofffolie sind aus der EP 0 688 263 B1, DE 103 58 409 A1, EP 1 163 102 B1 und EP 0 972 101 B1 bekannt. Das Nonwoven-Material wird bei Hygieneartikeln eingesetzt, um eine textilähnliche Haptik, eine weiche Oberfläche sowie eine gute Atmungsaktivität zu erreichen.

Der Erfindung liegt die Aufgabe zugrunde, bei der Herstellung eines Kunststoffformteils komplizierte Oberflächenstrukturen zu ermöglichen, wobei eine sichere und dauerhafte Verbindung zwischen dem Kaschierverbund und dem hinterspritzten Kunststoff gewährleistet ist.

Die Erfindung lehrt zur Lösung der Aufgabe die Verwendung eines Kaschierverbundes mit einer dehnbaren Kunststoffolie an einer ersten Oberfläche und einem Nonwoven-Material an der gegenüberliegenden Oberfläche, wobei das Nonwoven-Material zumindest abschnittsweise unter teilweiser Zerstörung der Materialstruktur kaltgereckt ist, zur Herstellung eines Kunststoffformteils. Erfindungsgemäß wird der Kaschierverbund zunächst in ein Spritzgießwerkzeug eingebracht, wobei nachfolgend die Oberfläche, an der das Nonwoven-Material angeordnet ist, mit einer Polymerschmelze hinterspritzt wird. Der Kaschierverbund wird durch das Hinterspritzen gedehnt, wodurch die Kunststofffolie an eine zugeordnete Fläche des Spritzgießwerkzeuges gedrückt wird, wobei das Nonwoven-Material zumindest teilweise von der Polymerschmelze durchdrungen wird. Beim Hinterspritzen des Kaschierverbundes kann die Polymerschmelze unmittelbar in das Nonwoven-Material eindringen, so dass auch bei einem schnellen Erstarren der Polymerschmelze eine sichere und dauerhafte Verbindung zwischen dem Kaschierverbund und dem hinterspritzten Kunststoff erreicht wird.

Während bei den aus dem Stand der Technik bekannten Ausführungen eines Kaschierverbundes für die Bildung hinterspritzter Kunststoffformteile, die beispielsweise aus einem Nonwoven-Material gebildete, offene Struktur als Verstärkung vorgesehen ist und zu einer erheblichen Versteifung des Kaschierverbundes führt, zeichnet sich der erfindungsgemäß vorgesehene Kaschierverbund durch eine gute Dehnbarkeit aus. Die Dehnbarkeit des ursprünglich steifen Nonwoven-Materials wird dadurch erreicht, dass das Nonwoven-Material vor der Kaschierung mit einer dehnbaren Kunststofffolie kaltgereckt wird, wobei die Materialstruktur partiell überdehnt und teilweise zerstört wird. Damit kann ein Kaschierverbund bereitgestellt werden, bei dem das Nonwoven-Material eine sehr gute und dauerhafte Anbindung an einen hinterspritzten Kunststoff ermöglicht, aber andererseits die Dehnungseigenschaften des gesamten Kaschierverbundes nicht übermäßig beeinträchtigt.

Im Rahmen der Erfindung kann vorgesehen sein, dass zur Kaschierung mit dem kaltgereckten Nonwoven-Material eine vorgefertigte Kunststofffolie zugeführt wird, wobei die Kaschierung ohne Einschränkung durch Verkleben, beispielsweise mit einem Hotmelt-Klebstoff oder unmittelbar durch Druck-und/oder Temperatureinwirkung erfolgen kann. Die Kunststofffolie kann als Mono- oder Mehrschichtfolie ausgeführt sein, wobei die Fasern des Nonwoven-Materials bei der Kaschierung vorzugsweise teilweise in den Klebstoff bzw. die angrenzende, aufgeschmolzene Folienschicht eindringen. Besonders bevorzugt erfolgt die Kaschierung ohne ein Aufschmelzen oder zumindest ohne ein vollständiges Aufschmelzen der einzelnen Fasern des Nonwoven-Materials.

Gemäß einer alternativen Ausgestaltung ist vorgesehen, dass zur Bildung der Kunststofffolie ein ein- oder mehrschichtiger Schmelzfilm aus einer Extrusionsdüse austritt und über eine Kühlwalze geführt wird, wobei der Schmelzfilm unmittelbar nach der Extrusion mit dem kaltgereckten Nonwoven-Material in Kontakt gebracht wird. Im Kontaktbereich kann das Material des Schmelzfilms dabei vor dem Erstarren in einem gewissen Maße in das Nonwoven-Material eindringen, so dass ohne die Verwendung eines zusätzlichen Klebstoffes eine sehr hohe Verbundfestigkeit erreicht wird. Im Rahmen einer bevorzugten weiteren Ausgestaltung kann dabei vorgesehen sein, dass der Schmelzfilm und das Nonwoven-Material durch einen Spalt zwischen der Kühlwalze und einem Glättband geführt werden, wobei das Nonwoven-Material an der Kühlwalze und der Schmelzfilm an dem Glättband anliegt Die durch das Erstarren des Schmelzfilms in dem Spalt zwischen der Kühlwalze und dem Glättband gebildete Kunststofffolie zeichnet sich an der dem Nonwoven-Material gegenüberliegenden Seite durch eine sehr hochwertige und gleichmäßige Oberfläche aus. Das Bilden einer Kunststofffolie durch das Erstarren eines Schmelzfilms in einem Spalt zwischen einer Kühlwalze und einem Glättband wird allgemein auch als Sleeve-Touch-Verfahren bezeichnet.

Im Rahmen einer besonders bevorzugten weiteren Ausgestaltung ist vorgesehen, dass die Erweichungstemperatur des Nonwoven-Materials oberhalb der Extrusionstemperatur des Schmelzfilmes liegt, so dass die einzelnen Fasern des Nonwoven-Materials nicht oder zumindest nicht vollständig aufgeschmolzen und sicher in der gebildeten Kunststofffolie verankert werden.

Ausgehend von dem grundlegenden Erfindungsgedanken eine gute Dehnbarkeit des Kaschierverbundes durch ein Kaltrecken des Nonwoven-Materials zu ermöglichen, ergeben sich verschiedene Möglichkeiten zur weiteren Ausgestaltung.

Gemäß einer ersten Alternative ist vorgesehen, dass das vorzugsweise von einer Rolle abgezogene Nonwoven-Material in Bewegungsrichtung und Querrichtung vollständig und im Wesentlichen gleichmäßig kaltgereckt wird. Der auf diese Weise gebildete Kaschierverbund zeichnet sich durch gleichmäßige Dehnungseigenschaften aus, die im Wesentlichen einem Material entsprechen, welches ausschließlich aus der Kunststofffolie des Kaschierverbundes gebildet ist. Der Kaschierverbund kann deshalb an Stelle der gemäß dem Stand der Technik zur Bildung hinterspritzter Kunststoffformteile vorgesehenen Folien eingesetzt werden, ohne dass eine spezielle Anpassung oder Umstellung des Spritzgießverfahrens erforderlich ist. Entsprechend der aus dem Stand der Technik bekannten Folien für die Bildung hinterspritzter Kunststoffformteile weist der erfindungsgemäß vorgesehene Kaschierverbund eine maximale Dehnbarkeit von üblicherweise zumindest 50 %, vorzugsweise zumindest 100 %, besonders bevorzugt zumindest 200 % auf. Im Vergleich zu einem Material, welches ausschließlich aus der Kunststofffolie des Kaschierverbundes gebildet ist, ist die zur Dehnung des Kaschierverbundes erforderliche Kraft durch die zusätzliche Schicht des Nonwoven-Materials bevorzugt um maximal 50 %, besonders bevorzugt um maximal 25 % erhöht.

Gemäß einer zweiten alternativen Ausgestaltung ist vorgesehen, dass das Nonwoven-Material vor der Kaschierung mit der dehnbaren Kunststofffolie lediglich in eine Richtung gereckt ist. Dieser zweiten alternativen Ausgestaltung liegt dabei die Erkenntnis zugrunde, dass insbesondere bei der Herstellung länglicher Kunststoffformteile, beispielsweise der Verkleidung einer A-, B- oder C-Säule eines Kraftfahrzeuges, die Dehnung des Kaschierverbundes hauptsächlich in einer Richtung erfolgt, so dass auch nur in dieser Richtung eine leichte Dehnbarkeit des Kaschierverbundes erforderlich ist. Wenn beispielsweise das Nonwoven-Material lediglich in Querrichtung kaltgereckt wird, weist der gebildete Kaschierverbund anisotrope Dehnungseigenschaften auf. In Bewegungsrichtung ist der Kaschierverbund dabei vergleichsweise steif, so dass bei der Handhabung des Kaschierverbundes, insbesondere bei einem Auf- und Abrollen, bei erhöhten Zugkräften eine Beschädigung und insbesondere auch ein Reißen vermieden werden kann, so dass sich gegenüber den aus dem Stand der Technik bekannten herkömmlichen Folien eine erhebliche Verbesserung ergibt.

Gemäß einer dritten alternativen Ausgestaltung ist vorgesehen, das Nonwoven-Material lediglich abschnittweise oder lokal unterschiedlich stark in Bewegungs-und/oder Querrichtung kaltzurecken. Die Aktivierung des Nonwoven-Materials durch das Kaltrecken erfolgt dann unter Berücksichtigung der genauen Form des zu fertigenden Kunststoffformteils. Der für die Bildung eines Kunststoffformteils vorgesehene Abschnitt des Kaschierverbundes mit dem lokal unterschiedlich kaltgereckten Nonwoven-Material ist dabei zunächst in genaue vorbestimmte Ausrichtung in das Spritzgießwerkzeug einzulegen. Durch eine lokal unterschiedliche Kaltreckung des Nonwoven-Materials ist überraschenderweise eine genaue Steuerung des Dehnverhaltens des Kaschierverbundes während des Spritzgießens möglich. So können beispielsweise Bereiche, in denen eine gleichmäßige, hohe Verformung vorgesehen ist, durch eine entsprechend starke lokale Reckung des Nonwoven-Materials leicht dehnbar ausgestaltet sein. Um aber beispielsweise ein lokales Aufreißen des Kaschierverbundes während des Spritzgießens an engen Radien und Kanten zu vermeiden, besteht auch die Möglichkeit, dort durch eine allenfalls geringe Vorreckung des Nonwoven-Materials eine erhöhte Festigkeit zu erzeugen, wobei dann die umliegenden Bereiche derart aktiviert werden können, dass insgesamt eine gleichmäßigere Dehnung unterhalb der Belastungsgrenze erfolgt.

Um das Nonwoven-Material vor der Kaschierung mit der Kuriststofffolie zu recken, können ohne Einschränkung Reckwalzen oder Reckrahmen vorgesehen sein. Besonders bevorzugt wird das Nonwoven-Material zur Kaltreckung durch einen Walzenspalt von ineinander greifenden konturierten Walzen geführt. Um das Nonwoven-Material beispielsweise in Querrichtung gleichmäßig kaltzurecken, können beispielsweise zwei ineinander greifende, wellenförmig ausgebildete Walzen vorgesehen sein. Des Weiteren kann durch eine ungleichmäßige Konturierung auch eine lokal unterschiedliche Reckung erreicht werden.

Vorzugsweise erfolgt das Hinterspritzen mit der Polymerschmelze derart, dass die einzelnen Fasern des Nonwoven-Materials nicht oder zumindest nicht vollständig aufgeschmolzen werden.

Das Kunststoffformteil kann an der von der Kunststofffolie gebildeten Oberfläche eine Strukturierung, beispielsweise in Form eines Ledermusters, aufweisen. Eine solche Strukturierung kann sowohl beim Hinterspritzen des Kaschierverbundes durch eine entsprechende Konturierung des Spritzgießwerkzeuges oder bei der Herstellung des Kaschierverbundes erzeugt werden.

Im Rahmen der vorliegenden Erfindung ist das Nonwoven-Material aus Kunststofffasem gebildet und wird beispielsweise mit einem Flächengewicht zwischen 10 bis 60 g/m³, vorzugsweise zwischen 15 und 30 g/m³ bereitgestellt. Die Polymerzusammensetzung des Nonwoven-Materials ist im Rahmen der vorliegenden Erfindung nicht eingeschränkt. Bevorzugt sind jedoch Materialien, die eine hohe Festigkeit aufweisen, um eine sichere Verbindung zwischen dem Kaschierverbund und dem hinterspritzten Kunststoff zu gewährleisten. Geeignet ist beispielsweise ein punktverfestigtes Spunbond-Nonwoven aus Polyester. Zusätzlich sollen möglichst viele der Fasern des Nonwoven-Materials in den angrenzenden Schichten der Kunststofffolie und des hinterspritzten Kunststoffes verankert sein, wobei auch eine möglichst weitgehende Durchdringung des Nonwoven-Materials durch den hinterspritzten Kunststoff und das Material der Kunststofffolie vorteilhaft ist. Diesbezüglich kann durch das Kaltrecken auch auf besonders vorteilhafte Weise ein Zerfasern des Nonwoven-Materials und ein Aufrichten einzelner Fasern erreicht werden.

Die Kunststofffolie des Kaschierverbundes ist insbesondere unter Berücksichtigung ihrer Oberflächeneigenschaften und Eignung als Dekorfolie auszuwählen. Bevorzugt sind dabei Materialien, die beständig und kratzfest sind. Abhängig von der vorgesehenen Verwendung des gebildeten Kunststoffformteiles werden darüber hinausgehend auch häufig bestimmte haptische Eigenschaften, beispielsweise eine matte, papierartige Oberfläche (Soft-Touch-Effekt) gefordert. Die Kunststofffolie kann beispielsweise aus thermoplastischem Polyolefin (TPO) oder thermoplastischem Polyurethan (TPU) gebildet sein. Im Rahmen der Erfindung kann die Kunststofffolie auch mehrlagig ausgebildet sein. So kann beispielsweise zur Verbesserung der Haftung zwischen dem Nonwoven-Material und der Kunststofffolie vorgesehen sein, dass an der dem Nonwoven-Material zugewandten Seite der Kunststofffolie eine Haftvermittlerschicht vorgesehen ist. Als Haftvermittler sind beispielsweise ein Copolyamid oder ein Polyether(ester)-Block-Amid (TPE-A) geeignet. Die Dicke der Folie liegt typischerweise zwischen 100 µm bis 700 µm, vorzugsweise 150 µm bis 500 µm besonders bevorzugt 200 µm bis 350 µm. Zur Verbesserung der Oberflächeneigenschaften kann auch eine Beschichtung, beispielsweise mit einem Lack vorgesehen sein. Die als Dekoroberftäche vorgesehene Seite der Folie weist bevorzugt eine hohe Kratzfestigkeit und eine Härte zwischen 65 und 95 Shore A (gemäß DIN 53505 : 2000-08) auf. Die Folie soll insgesamt eine gute Dehnbarkeit aufweisen.

Als Polymerschmelze zum Hinterspritzen des Kaschierverbundes ist beispielsweise Polypropylen (PP), Acrylnitril-Butadien-Styrol (ABS), Polycarbonat (PC), Polyamid (PA), thermoplastisches Elastomer (TPE) oder eine Mischung zumindest zwei der genannten Polymere geeignet. Zur Erhöhung der Festigkeit oder Reduzierung der Herstellungskosten können darüber hinausgehend Verstärkungsstoffe wie beispielsweise Glasfasern, Naturfasern und Kohlenstofffasern oder Füllstoffe vorgesehen sein.

Gegenstand der Erfindung ist auch ein Verfahren gemäß Patentanspruch 3 zur Herstellung eines für die zuvor beschriebene Verwendung geeigneten Kaschierverbundes. Die Unteransprüche 4 bis 7 betreffen bevorzugte Ausgestaltungen des Verfahrens und wurden zuvor bereits im Hinblick auf die erfindungsgemäße Verwendung erläutert.

Die Erfindung wird im Folgenden anhand einer lediglich ein Ausführungsbeispiel darstellenden Zeichnung erläutert. Es zeigen schematisch:
- **Fig. 1**: ein Verfahren zur Herstellung eines Kaschierverbundes für die Bildung hinterspritzter Kunststoffformteile;
- **Fig. 2**: eine alternative Ausgestaltung des Verfahrens gemäß Fig. 1;
- **Fig. 3a und b**: jeweils einen Kaschierverbund für die Bildung hinterspritzter Kunststoffformteile in einer Schnittdarstellung;
- **Fig. 4**: den Randbereich eines Kunststoffformteils in einer Schnitt- darstellung.

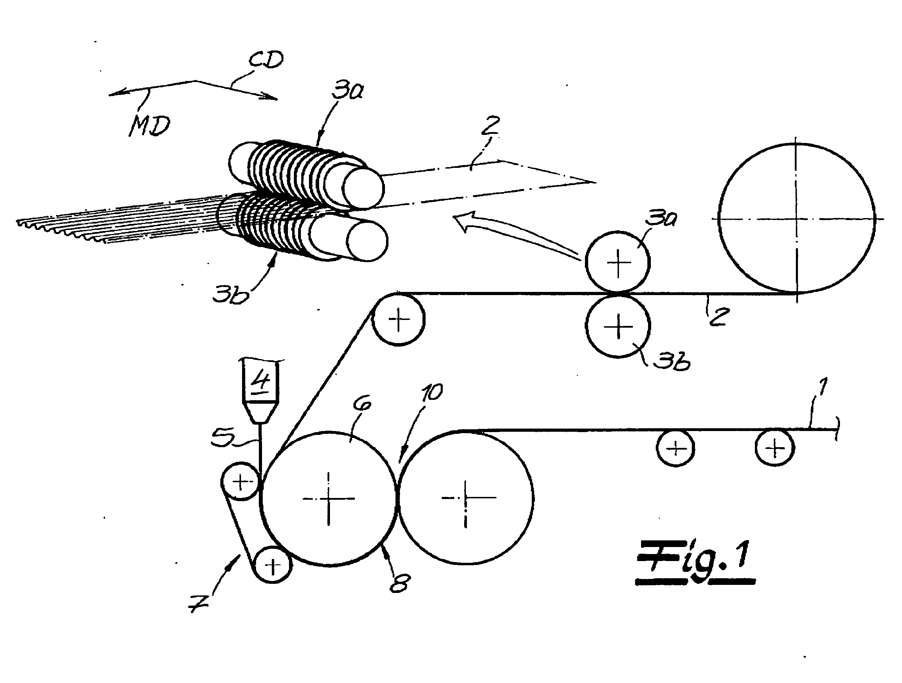

Fig. 1 zeigt eine bevorzugte Ausgestaltung des Verfahrens zur Herstellung eines Kaschierverbundes 1, wobei ein Nonwoven-Material 2, beispielsweise ein punktverfestigtes Spunbond-Nonwoven aus Polyester mit einem Flächengewicht zwischen 15 bis 30 g/m³, durch einen Walzenspalt von ineinander greifenden, konturierten Walzen 3a, 3b geführt und dabei unter teilweiser Zerstörung der Materialstruktur kaltgereckt wird. Abhängig von der Konturierung der ineinander greifenden Walzen 3a, 3b erfolgt in Bewegungsrichtung MD und/oder Querrichtung CD eine lediglich abschnittsweise oder vollständige und vorzugsweise im Wesentlichen gleichmäßige Kaltreckung des Nonwoven-Materials 2. Das Nonwoven-Material 2 wird nach der Kaltreckung in Kontakt mit einem aus einer Extrusionsdüse 4 austretenden Schmelzfilm 5, der beispielsweise aus TPU bestehen kann, gebracht. Der Schmelzfilm 5 und das Nonwoven-Material 2 werden nachfolgend durch einen Walzenspalt zwischen einer Kühlwalze 6 und einem Glättband 7 geführt, wobei der Schmelzfilm 5 in einem gewissen Maße in das Nonwoven-Material 2 eindringt und nachfolgend durch die Kühlung zu einer Kunststofffolie 8 erstarrt. Durch das Erstarren des Schmelzfilms 5 an dem Glättband 7 wird eine Kunststofffolie 8 mit einer sehr gleichmäßigen und hochwertigen, dem Nonwoven-Material 2 gegenüberliegenden Oberfläche 9 erzeugt. Durch eine entsprechende Ausgestaltung des Glättbandes 7 kann dabei die Oberfläche 9 mit einer Strukturierung, beispielsweise in Form eines Ledermusters, versehen werden. Der aus dem Nonwoven-Material 2 und der Kunststofffolie 8 gebildete Kaschierverbund 1 wird nachfolgend durch einen weiteren Walzenspalt 10 geführt.

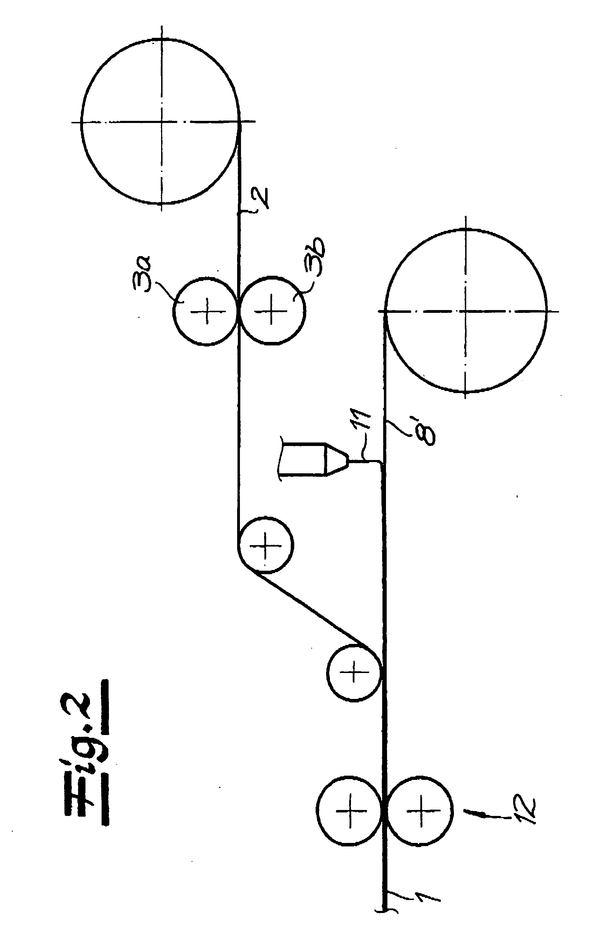

Fig. 2 zeigt eine alternative Ausgestaltung des Verfahrens gemäß Fig. 1, wobei das Nonwoven-Material 2 wie zuvor von einer Rolle abgezogen und zur Kaltreckung durch konturierte Walzen 3a, 3b geführt wird. Des Weiteren wird eine vorgefertigte Kunststofffolie 8' zugeführt, mit einem Hotmelt-Klebstoff 11 versehen und durch Kaschierwalzen 12 mit dem Nonwoven-Material 2 verbunden. In einer Abwandlung des in Fig. 2 dargestellten Verfahrens kann auch eine unmittelbare Verbindung des Nonwoven-Materials 2 und der Kunststofffolie 8' durch Druck- und/oder Temperatureinwirkung erfolgen.

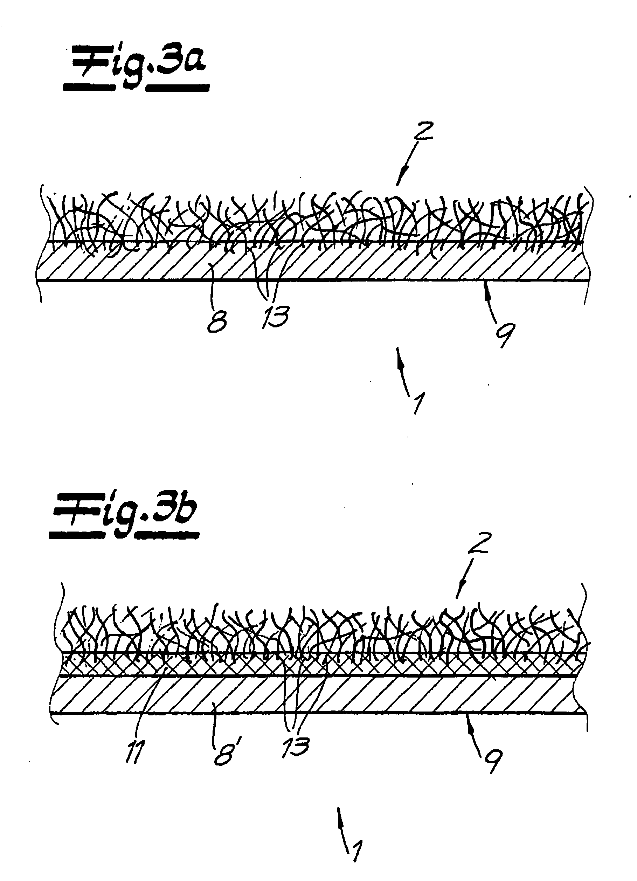

Fig. 3a zeigt den gemäß dem Verfahren nach Fig. 1 gefertigten Kaschierverbund 1. Durch das Kaltrecken ist die Struktur des Nonwoven-Materials 2 teilweise zerstört. Durch die damit verbundene Reduzierung der Festigkeit des Nonwoven-Materials 2 wird dieses leicht dehnbar. Da das Nonwoven-Material 2 bei der Kaschierung mit dem Schmelzfilm 5 in Verbindung gebracht wird und die Kunststofffolie 8 sich durch das Erstarren des Schmelzfilms 5 bildet, sind eine Vielzahl der Fasern 13 des Nonwoven-Materials 2 in die Kunststofffolie 8 eingedrungen, wodurch eine besonders hohe Verbundfestigkeit erreicht wird. Zu einer hohen Festigkeit trägt auch bei, dass durch das Kaltrecken eine Vielzahl der Fasern 13 aufgerichtet ist.

Fig. 3b zeigt einen gemäß dem Verfahren nach Fig. 2 hergestellten Kaschierverbund, wobei im Unterschied zu der Fig. 3a das Nonwoven-Material 2 durch einen Hotmelt-Klebstoff 11 mit der Kunststofffolie 8' verbunden ist. Eine gute Verbundfestigkeit wird hierbei insbesondere dadurch erreicht, dass der Hotmelt-Klebstoff 11 in das Nonwoven-Material 2 eingedrungen ist und einen Teil der Fasern 13 an ihren Enden umgibt. Durch das Kaltrecken des Nonwoven-Materials 2 und die damit verbundene teilweise Zerstörung der Materialstruktur kann eine leichte Dehnbarkeit des Kaschierverbundes 1 erreicht werden. Bei einer vollständigen Kaltreckung des Nonwoven-Materials 2 in Bewegungsrichtung MD und Querrichtung CD weist der erfindungsgemäße Kaschierverbund 1 vergleichbare Dehnungseigenschaften wie die aus dem Stand der Technik für die Bildung hinterspritzter Kunststoffteile bekannten Folien auf.

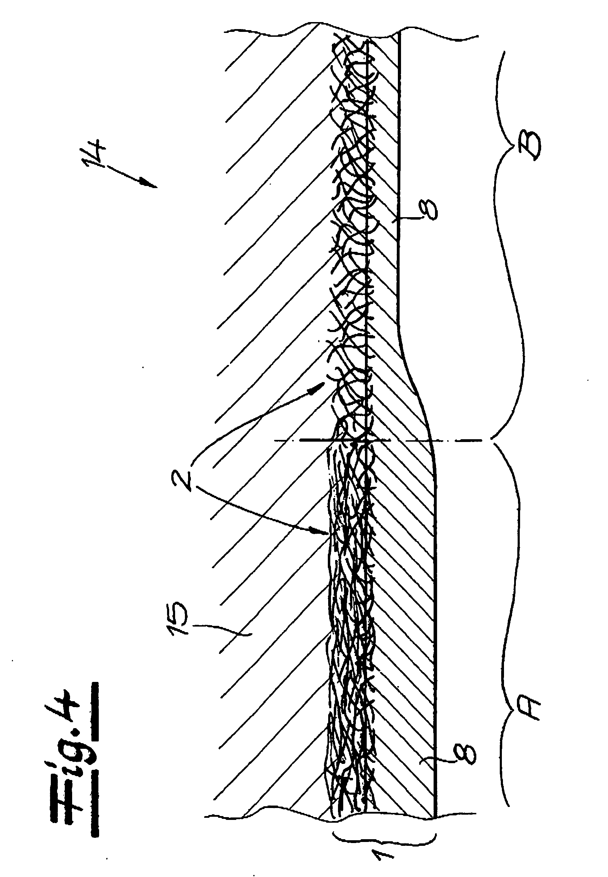

Im Rahmen der vorliegenden Erfindung ist jedoch auch auf besonders vorteilhafte Weise möglich, das Dehnungsverhalten des Kaschierverbundes 1 durch eine lokal unterschiedliche Kaltreckung des Nonwoven-Materials 2 gezielt zu steuern. Fig. 4 zeigt diesbezüglich exemplarisch den Ausschnitt eines Kunststoffformteils 14, welches aus dem Kaschierverbund 1 und einem hinterspritzten Kunststoff 15 gebildet ist. Gemäß der Fig. 4 weist der Kaschierverbund 1 einen ersten Bereich A auf, in dem das Nonwoven-Material 2 vor der Kaschierung mit der Kunststofffolie 8 nicht gereckt wurde. Das Nonwoven-Material 2 weist in dem Bereich A im Wesentlichen die ursprüngliche Struktur auf. Da das Nonwoven-Material 2 in dem Bereich A nicht kaltgereckt wurde, ist auch der gesamte Kaschierverbund dort vergleichsweise steif und bei dem Hinterspritzen mit dem Kunststoff 15 nicht oder nur geringfügig verformt worden. In dem Bereich B des Kaschierverbundes 1 ist das Nonwoven-Material 2 vor der Kaschierung mit der Kunststofffolie 8 unter teilweiser Zerstörung der Materialstruktur kaltgereckt worden. Entsprechend hat sich dieser durch die Aktivierung des Nonwoven-Materials 2 leicht dehnbare Bereich des Kaschierverbundes 1 bei dem Hinterspritzen mit dem Kunststoff 15 stark gedehnt, was insbesondere auch an der Reduzierung der Dicke der Kunststofffolie 8 zu erkennen ist.

### Ausführungsbeispiel:

Es wurde ein Laminat hergestellt, bestehend aus einer 335 µm dicken Folie aus einem thermoplastischen Polyurethan (TPU), einem Nonwoven mit einem Flächengewicht von 25 g/m² und einer Copolyamid-Haftvermittlerschicht zwischen Folie und Nonwoven. Das Nonwoven wurde vor der Applikation durch eine Walzenanordnung aus Profilwalzen mit einer Aktivierungstiefe von ca. 3 mm kaltgereckt. Zum Vergleich wurde ein Laminat aus den vorgenannten Materialien ohne vorherige Kaltreckung (Aktivierung) des Nonwovens hergestellt. Der nachfolgenden Tabelle sind die mechanischen Eigenschaften des erfindungsgemäßen Laminats und der an dem Vergleichsmaterial sowie an einer 335 µm dicken TPU-Folie gegenüber gestellt. Durch eine vorherige Aktivierung (Kaltreckung) des Nonwovens kann die Dehnung des Laminats signifikant verbessert werden. Die an dem erfindungsgemäßen Laminat gemessene Bruchdehnung ist vergleichbar mit der Bruchdehnung der Folien.

Des Weiteren muss eine geringere Kraft aufgewendet werden, um das erfindungsgemäße Laminat um 50 bis 250 % zu dehnen.

| Eigenschaft | Einheit | Laminat mit Nonwoven (Vergleichsmaterial) | Laminat durch Kalt-reckung vorbehandelten Nonwoven | TPU-Folie |
|---|---|---|---|---|
| Bruchdehnung | % | 1200 | 1700 | 1700 |
| Kraft bei 50 % Dehnung | N | 40 | 25 | 6 |
| Kraft bei 100 % Dehnung | N | 40 | 25 | 12 . |
| Kraft bei 250 % Dehnung | N | 40 | 25 | 18 |

## Patentansprüche

1. Verwendung eines Kaschierverbundes mit einer dehnbaren Kunststofffolie (8, 8') an einer ersten Oberfläche und einem Nonwoven-Material (2) an der gegenüberliegenden Oberfläche, wobei das Nonwoven-Material (2) zumindest abschnittsweise unter teilweiser Zerstörung der Materialstruktur kaltgereckt ist, zur Herstellung eines Kunststoffformteils (14),
wobei der Kaschierverbund (1) in ein Spritzgießwerkzeug eingebracht wird,
wobei die Oberfläche, an der das Nonwoven-Material (2) angeordnet ist, mit einer Polymerschmelze hinterspritzt wird,
wobei der Kaschierverbund (1) durch das Hinterspritzen gedehnt wird, wodurch die Kunststofffolie (8, 8') an eine zugeordnete Fläche des Spritzgießwerkzeuges angedrückt wird und
wobei das Nonwoven-Material (2) zumindest teilweise von der Polymerschmelze durchdrungen wird.

2. Verwendung gemäß Anspruch 1, wobei das Hinterspritzen mit der Polymerschmelze bei einer Verarbeitungstemperatur erfolgt, die unterhalb der Erweichungstemperatur des Nonwoven-Materials (2) liegt.

3. Verfahren zur Herstellung eines für die Verwendung nach Anspruch 1 oder 2 geeigneten Kaschierverbundes
wobei ein Nonwoven-Material (2) bereitgestellt wird, welches vorzugsweise von einer Rolle abgezogen wird,
wobei das Nonwoven-Material (2) zumindest abschnittsweise unter teilweiser Zerstörung der Materialstruktur kaltgereckt wird,
wobei nachfolgend das kaltgereckte Nonwoven-Material (2) mit einem zur Bildung einer dehnbaren Kunststofffolie (8) aus einer Extrusionsdüse (4) austretenden Schmelzfilm (5) in Kontakt gebracht wird und
wobei der Schmelzfilm (5) und das Nonwoven-Material (2) zur Kaschierung derart durch einen Spalt zwischen einer Kühlwalze (6) und einem Glättband (7) geführt werden, dass das Nonwoven-Material (2) an der Kühlwalze (6) und der Schmelzfilm (5) an dem Glättband (7) anliegen.

4. Verfahren nach Anspruch 3, wobei ein Nonwoven-Material (2) bereitgestellt wird, dessen Erweichungstemperatur oberhalb der Temperatur liegt, mit der der Schmelzfilm (5) extrudiert wird.

5. Verfahren nach Anspruch 3 oder 4, wobei das Nonwoven-Material (2) vollständig in Bewegungsrichtung (MD) und/oder Querrichtung (CD) kaltgereckt wird.

6. Verfahren nach Anspruch 3 oder 4, wobei das Nonwoven-Material (2) nur abschnittsweise in Bewegungsrichtung (MD) und/oder Querrichtung (CD) kaltgereckt wird.

7. Verfahren nach einem der Ansprüche 3 bis 6, wobei das Nonwoven-Material (2) zur Kaltreckung durch einen Walzenspalt von ineinander greifenden konturierten Walzen (3a, 3b) geführt wird.

## Claims

1. Use of a laminated composite comprising a stretchable plastic film (8, 8') on a first surface and a nonwoven material (2) on the opposite surface, wherein the nonwoven material (2) is cold-drawn at least in sections whilst partially destroying the material structure, for producing a plastic moulding (14),
wherein the laminated composite (1) is inserted into an injection moulding tool,
wherein the surface on which the nonwoven material (2) is disposed is back-injection moulded with a polymer melt,
wherein the laminated composite (1) is stretched by the back-injection moulding, whereby the plastic film (8, 8') is pressed against an associated surface of the injection moulding tool and
wherein the nonwoven material (2) is at least partially penetrated by the polymer melt.

2. The use according to claim 1, wherein the back-injection moulding is carried out with the polymer melt at a processing temperature which lies below the softening temperature of the nonwoven material (2).

3. The method for producing a laminated composite suitable for the use according to claim 1 or 2,
wherein a nonwoven material (2) is provided, which is preferably withdrawn from a roller,
wherein the nonwoven material (2) is cold drawn at least in sections whilst partially destroying the material structure,
wherein subsequently the cold-drawn nonwoven material (2) is brought in contact with a melt film (5) emerging from an extrusion nozzle (4) to form a stretchable plastic film (8) and
wherein the melt film (5) and the nonwoven material (2) for laminating are guided through a gap between a cooling roller (6) and a smoothing band (7) in such a manner that the nonwoven material (2) abuts against the cooling roller (6) and the melt film (5) abuts against the smoothing band (7).

4. The method according to claim 3, wherein a nonwoven material (2) is provided, whose softening temperature lies above the temperature at which the melt film (5) is extruded.

5. The method according to claim 3 or 4, wherein the nonwoven material (2) is cold drawn completely in the direction of movement (MD) and/or the transverse direction (CD).

6. The method according to claim 3 or 4, wherein the nonwoven material (2) is only cold drawn in sections in the direction of movement (MD) and/or the transverse direction (CD).

7. The method according to any one of claims 3 to 6, wherein the nonwoven material (2) for cold drawing is guided through a roll gap of intermeshing contoured rollers (3a, 3b).

## Revendications

1. Utilisation d'un composite de placage comportant un film de plastique extensible (8, 8') sur une première surface et un matériau non tissé (2) sur la surface opposée, le matériau non tissé (2) étant étiré à froid du moins par sections en détruisant partiellement la structure du matériau pour fabriquer une pièce en plastique (14),
le composite de placage (1) étant introduit dans un outil de moulage par injection,
une coulée de polymère étant injectée sur l'arrière de la surface sur laquelle le matériau non tissé (2) est disposé,
le composite de placage (1) étant étiré par l'injection arrière, ce qui comprime le film de plastique (8, 8') sur une surface associée de l'outil de moulage par injection et
le matériau non tissé (2) étant au moins partiellement traversé par la coulée de polymère.

2. Utilisation selon la revendication 1, l'injection arrière de coulée de polymère ayant lieu à une température de transformation inférieure à la température de ramollissement du matériau non tissé (2).

3. Procédé de fabrication d'un composite de placage approprié pour l'utilisation selon la revendication 1 ou 2,
dans lequel on se procure un matériau non tissé (2) qui est de préférence tiré d'un rouleau,
le matériau non tissé (2) étant étiré à froid du moins par sections en détruisant partiellement la structure du matériau,
le matériau non tissé (2) étiré à froid étant ensuite amené en contact avec un film coulé (5) sortant d'une buse d'extrusion (4) pour former un film de plastique extensible (8) et
le film coulé (5) et le matériau non tissé (2) étant guidés pour le placage à travers une emprise entre un cylindre refroidisseur (6) et une bande de lissage (7) de manière à ce que le matériau non tissé (2) repose sur le cylindre refroidisseur (6) et le film coulé sur la bande de lissage (7).

4. Procédé selon la revendication 3, dans lequel on se procure un matériau non tissé (2) dont la température de ramollissement se situe au dessus de la température à laquelle le film coulé (5) est extrudé.

5. Procédé selon la revendication 3 ou 4, dans lequel le matériau non tissé (2) est totalement étiré à froid dans le sens du mouvement (MD) et/ou le sens transversal (CD).

6. Procédé selon la revendication 3 ou 4, dans lequel le matériau non tissé (2) est étiré à froid par sections dans le sens du mouvement (MD) et/ou le sens transversal (CD).

7. Procédé selon une des revendications 3 à 6, dans lequel le matériau non tissé (2), pour l'étirer à froid, est guidé dans une emprise de cylindres profilés (3a, 3b) s'engrenant les uns dans les autres.
